Europäisches Patentamt

(19) European Patent Office

Office européen des brevets

(11) Numéro de publication: **0 095 392 B1**

(12) **FASCICULE DE BREVET EUROPEEN**

(45) Date de publication du fascicule du brevet:
**27.11.85**

(21) Numéro de dépôt: **83400098.6**

(22) Date de dépôt: **14.01.83**

(51) Int. Cl.⁴: **G 11 B 23/50**

(54) **Système de ventilation d'une cartouche pour disque(s) magnétique(s) amovible(s) et cartouche ventilée par ce système.**

(30) Priorité: **11.02.82 FR 8202207**

(43) Date de publication de la demande:
**30.11.83 Bulletin 83/48**

(45) Mention de la délivrance du brevet:
**27.11.85 Bulletin 85/48**

(84) Etats contractants désignés:
**DE GB IT NL SE**

(56) Documents cités:
**FR - A - 2 232 032**
**GB - A - 2 040 538**
**GB - A - 2 051 458**
**US - A - 3 740 735**
**US - A - 4 092 687**

(73) Titulaire: **CII HONEYWELL BULL, 94 Avenue Gambetta, F-75990 Paris Cedex 20 (FR)**

(72) Inventeur: **Barski, Guy, 94 Avenue Gambetta, F-75020 Paris (FR)**

(74) Mandataire: **Gouesmel, Daniel et al, 94, avenue Gambetta, F-75020 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un système de ventilation d'une cartouche pour disque(s) magnétique(s) amovible(s) et la cartouche ventilée par ce système. Elle est plus particulièrement utilisée dans les mémoires à disques des systèmes de traitement de l'information.

Dans de tels systèmes, les mémoires à disques magnétiques sont de plus en plus fréquemment utilisées en raison de leur capacité de stockage et du temps relativement court mis par les têtes magnétiques d'écriture/lecture à accéder à une information contenue en un point quelconque des disques à partir du moment où elles ont reçu l'ordre d'accéder à cette information.

On sait que les disques magnétiques portent des informations sur des pistes d'enregistrement concentriques circulaires dont la largeur n'excède pas quelques dizaines de microns, et qui sont disposées sur leurs deux faces.

Pour permettre la lecture et l'écriture des informations, les têtes magnétiques sont disposées de chaque côté des disques à une distance de quelques dixièmes de microns de ceux-ci.

Les disques magnétiques sont entraînés par un moteur électrique à une vitesse de rotation constante. Dans la pratique courante, et plus particulièrement dans le cas des mémoires qui comportent un nombre limité de disques (un ou deux disques), ces mémoires ayant une relativement faible capacité de stockage (de l'ordre d'une dizaine à quelques dizaines de millions d'octets, l'octet étant composé de huit bits, un bit étant l'unité d'information binaire égale à un ou zéro et toute matérialisation de ce chiffre, par exemple sous forme d'enregistrement magnétique), au moins l'un de ces disques est contenu dans une cartouche amovible. Une mémoire à disques ne contient généralement qu'une seule cartouche amovible qui est remplacée par une autre dès que les opérations de lecture et/ou écriture concernant le disque qu'elle contient sont terminées. On voit ainsi, qu'à une même mémoire à disques magnétiques, peut être associée une pluralité de cartouches amovibles contenant chacune un disque magnétique.

Dans le cas où la mémoire à disques comporte deux disques magnétiques, l'un de ceux-ci est non amovible et reste en permanence à l'intérieur de la mémoire à disques (l'autre étant contenu dans la cartouche amovible).

On connaît des cartouches pour disque magnétique amovible, dont la forme et les dimensions normalisées assurent l'interchangeabilité, et dont la manipulation, lors de leur mise en place dans la mémoire à disques, est extrêmement simple. Elles permettent de plus au disque de ne pas être contaminé par des poussières et particules quelconques lors des périodes de repos, c'est-à-dire les périodes où la cartouche est stockée dans des locaux appropriés extérieurs à la mémoire à disques magnétiques. En fonctionnement elles permettent une ventilation du disque permettant de maintenir celui-ci dans une parfaite propreté, ce qui accroît la fiabilité de lecture des informations contenues sur celui-ci.

Une telle cartouche pour disque magnétique amovible est décrite et revendiquée par exemple, dans le brevet français N° 2337396 déposé par la Compagnie Honeywell Bull le 31 décembre 1975 sous le titre «Conditionnement pour disque magnétique». Une telle cartouche comprend un disque magnétique amovible rigide de faible diamètre. Elle est relativement plate (sa hauteur est plus de 10 fois inférieure à sa longueur ou sa largeur) et peut être insérée dans un logement adéquat d'une mémoire à disques. Elle est pourvue d'ouvertures qui sont fermées pendant les périodes de repos de la cartouche et ouvertes lorsque la cartouche est insérée dans la mémoire à disques, de manière à permettre le passage des têtes magnétiques d'écriture/lecture et le déplacement de celles-ci par rapport aux différentes pistes d'enregistrement. Cette cartouche comprend des moyens permettant de coupler le moyeu du disque à des moyens d'entraînement en rotation (qui sont le plus souvent constitués d'un moteur électrique).

Cette cartouche est caractérisée en ce que ses parois opposées sont rigides mais élastiquement déformables et bombées vers l'extérieur à l'état libre. La première paroi comporte en son centre une saillie intérieure formant une portée annulaire en regard de sa face interne et la seconde comporte une ouverture coaxiale bordée par une portée annulaire sur sa face externe. Le moyeu du disque est annulaire et porte deux collets intérieur et extérieur respectivement disposés pour engager lesdites portées, mais qui sont axialement espacés d'une moindre distance que ces dernières à l'état libre, de sorte qu'au repos les parois applaties de la cartouche assurent par rappel élastique le maintien mécanique du disque. Sa libération en service, c'est-à-dire lors de son utilisation dans la mémoire à disque, peut être obtenue par simple rapprochement desdites parois.

Les portées et les collets sont agencés de façon à assurer au repos, la fermeture étanche de la cartouche, de sorte que le moyeu du disque et le disque lui-même sont protégés des poussières.

En choisissant de manière appropriée la disposition relative des collets et leur diamètre respectif, l'auto-ventilation du disque en service peut être assurée par l'effet centrifuge de l'air sur les deux faces du disque, ce qui permet d'une part le nettoyage de celui-ci de poussières et particules parasites et d'autre part, son refroidissement.

On connaît également d'autres cartouches pour disque(s) magnétique(s) amovible(s) mais dont le système de ventilation est différent. Une telle cartouche est par exemple décrite dans le brevet français N° 2154922, déposé le 30 septembre 1971 par la société industrielle Honeywell Bull sous le titre «Dispositif de ventilation pour unité de disques magnétiques».

La cartouche décrite dans ce brevet N° 2154922 contient au moins un disque, et est percée d'une première ouverture latérale permettant l'introduction de brosses et d'une seconde ouverture latérale permettant l'introduction de têtes de lecture/écri-

ture, des ouvertures correspondantes étant aménagées dans le bâti de la mémoire à disques contenant la cartouche. Cette cartouche se caractérise par le fait qu'un conduit d'air filtré débouche dans le bâti de la mémoire à disques, en regard de la première ouverture, l'air sortant de la cartouche à travers la seconde ouverture. L'air filtré introduit dans la cartouche est entraîné par effet de centrifugation lorsque les disques tournent et a tendance à s'échapper à la périphérie du disque par les ouvertures pratiquées dans la cartouche et plus précisément par les ouvertures de passage des têtes. A l'entrée du conduit d'air filtré, est placé un régulateur qui permet d'obtenir un débit constant relativement indépendant de la pression appliquée à l'entrée du conduit de ventilation et évite un colmatage trop rapide du filtre. Cela augmente la durée de vie de ce dernier, les mémoires à disque étant généralement munies d'un filtre de dépoussiérage à très grand pouvoir filtrant.

Ainsi qu'il a été décrit dans le brevet N° 2439435, déposé le 19 octobre 1978 par la Compagnie titulaire sous le titre: «Mode d'écriture d'informations sur un support d'enregistrement magnétique», les informations sont de préférence écrites sur les disques contenus dans les cartouches amovibles de la mannière suivante: elles sont réparties à l'intérieur de secteurs circulaires égaux et adjacents, une face du disque étant divisée habituellement en plusieurs dizaines de secteurs. Chaque secteur est divisé en deux aires inégales dont la plus grande comprend les données destinées à être traitées par le système de traitement de l'information auquel appartient la mémoire à disques contenant la cartouche, et l'aire la plus petite comprend des informations de repérage des pistes, informations destinées à être utilisées par le dispositif permettant de positionner les têtes magnétiques d'écriture et de lecture en regard des pistes du disque. Pour chaque secteur l'aire la plus petite est divisée en plusieurs zones appelées zones de référence, en nombre égal à celui des pistes, chaque piste étant associée à une seule et même zone.

Il est rappelé que l'on désigne sous le nom de densité longitudinale des informations (ou encore densité linéaire) le nombre d'informations par unité de longueur mesurée suivant la circonférence d'une piste du disque, et que l'on désigne sous le nom de densité radiale, le nombre de pistes par unité de longueur mesurée suivant le diamètre du disque.

La tendance actuelle du développement des mémoires à disques magnétiques est, notamment, d'accroître sensiblement les densités radiale et longitudinale de manière à atteindre des densités raidales de l'ordre de 150 à 400 pistes/cm (soit 850 à 1000 pistes par pouce: on dit encore 850 à 1000 TPI), les densités linéaires atteintes étant de l'ordre de 2000 bits/cm ou encore 5000 bits par pouce (on dit encore 5000 bpi).

On montre qu'il est difficile d'obtenir pour les disques magnétiques amovibles contenus dans les cartouches, les mêmes densités longitudinale et radiale que celles d'un disque non amovible qui reste en permanence à l'intérieur d'une mémoire à disques. En effet, l'amovibilité d'un disque magnétique intervient comme un facteur de limitation des densités longitudinale et radiale, en raison notamment de la difficulté d'obtenir un environnement de la cartouche ayant une propriété suffisante. Cela signifie que toute cartouche ne pouvant posséder la même étanchéité qu'un disque non amovible contenu en permanence dans la mémoire à disques, peut du fait de la variation des conditions climatiques dans laquelle elle se trouve, absorber un plus ou moins grand nombre de poussières de particules parasites. De plus, le fait qu'il existe deux enceintes séparées, à savoir, celle de la cartouche elle-même, et celle dans laquelle se trouve les têtes magnétiques d'écriture/lecture en l'absence de la cartouche amovible, conduit à considérer qu'au moment de l'insertion de la cartouche dans la mémoire à disques, il entre dans la cartouche une certaine quantité d'air pollué, c'est-à-dire contenant des particules parasites provenant de l'enceinte où se trouvaient les têtes magnétiques d'écriture/lecture. On conçoit, qu'étant donné la dimension des particules ou poussières parasites qui est de l'ordre de grandeur de la distance qui sépare les têtes magnétiques de la couche magnétique du disque, il peut en résulter des erreurs dans la lecture ou l'écriture des informations.

Il en résulte que pour obtenir des densités longitudinale et radiale élevées pour les disques des cartouches amovibles et si possible, obtenir les mêmes densités que celles obtenues sur les disques non amovibles, il est nécessaire d'obtenir:

— une réduction de la pollution par les poussières ou particules parasites, ainsi que l'élimination des poussières résiduelles qui peuvent subsister dans la cartouche après son insertion dans la mémoire à disques. Cette réduction est difficile à obtenir, de façon suffisante, dans les cartouches auto-ventilées telle que celle décrite dans la demande de brevet N° 2337396 précitée, car il subsiste toujours des particules très fines, de l'ordre de grandeur des informations du disque, à la surface de ce dernier.

Une telle réduction n'est pas non plus obtenue de façon suffisante, dans les cartouches munies d'un système de ventilation tel que celui décrit dans le brevet français N° 2154922 précité. De plus, ce dernier système, en évacuant l'air par l'ouverture où sont introduites les têtes de lecture/écriture risque de perturber le mouvement de ces dernières au-dessus des disques magnétiques.

On connaît également des systèmes de ventilation pour disques magnétiques permettant de diminuer la pollution de ceux-ci par les poussières ou particules parasites, l'efficacité de ceux-ci n'étant toutefois pas suffisante pour obtenir une réduction substantielle de la pollution pour des cartouches contenant des disques amovibles.

Le premier de ces systèmes est décrit dans le brevet américain US-A N° 3740735. Il comprend des moyens à turbines coaxiaux au moyeu du disque et aux moyens d'entraînement en rotation de celle-ci, les moyens à turbines recevant l'air évacué provenant de la cartouche et le renvoyant vers celle-ci à travers des conduits qui lui sont extérieurs.

Le second système de ventilation est décrit dans le brevet français Fr-A N° 2232032. Il comprend des conduits d'air dont chacun est associé à une face d'un disque appartenant à une pile contenant une pluralité de disques. Ce système n'est toutefois pas adapté à la ventilation d'une cartouche amovible telle que celle décrite dans le brevet N° 2154922 précité.

Le troisième système de ventilation est décrit dans le brevet britannique GB-A N° 2040538. Il comprend un premier filtre disposé dans la partie inférieure de la mémoire à disques, au voisinage des joints de roulements à billes disposés sur les moyens d'entraînement en rotation du disque, et un filtre contenu dans la partie supérieure (couvercle) de la mémoire à disques. Le but du premier filtre est d'empêcher la pollution du disque magnétique par les joints des roulements à billes et le but du second filtre est d'éviter la pollution du disque par l'air provenant de l'extérieur de la mémoire à disques.

Le but de l'invention est de réaliser un système de ventilation d'une cartouche pour au moins un disque magnétique amovible, où la pollution du disque par les poussières et particules parasites est très sensiblement diminuée.

Ceci est réalisé en combinant les caractéristiques des trois systèmes de ventilation précédents et en les adaptant à une cartouche amovible. Ceci est obtenu, d'une part, en munissant la cartouche de conduits d'arrivée d'air amenant ce dernier à une pression suffisante au-dessus de la zone du disque contenant les informations (l'ensemble des pistes de chaque face du disque) de manière à créer des jets d'air destinés à décoller les poussières qui sont fixées sur le disque, lors des périodes de repos de la cartouche le contenant et, d'autre part, en équipant la cartouche elle-même de moyens de filtrage qui reçoivent l'air provenant de moyens à turbines extérieurs à la cartouche et coaxiaux aux moyens d'entraînement en rotation du disque, et le transmettent aux conduits d'arrivée d'air.

Selon l'invention, le système de ventilation d'une cartouche pour au moins un disque magnétique amovible destinée à être insérée dans un logement approprié d'une mémoire à disque magnétique, constituée d'une enveloppe à l'intérieur de laquelle est placé le disque, la cartouche comprenant une première ouverture permettant le passage de têtes de lecture/écriture des informations contenues sur le disque, un dispositif permettant d'obturer cette première ouverture lorsque la cartouche est au repos, le moyeu du disque comportant des moyens d'accouplement de celui-ci à des moyens d'entraînement en rotation, le logement comprenant lesdits moyens d'entraînement et des moyens à turbines qui sont coaxiaux au moyeu du disque et aux moyens d'entraînement et reçoivent l'air évacué provenant d'une seconde ouverture pratiquée dans l'enveloppe, et renvoient cet air par des conduits, dans la cartouche, est caractérisé en ce que la cartouche comprend:
— des conduits d'arrivée d'air associés à chaque face du disque permettant d'introduire l'air à une pression suffisante au moins au-dessus des zones de chaque face des disques contenant les informations,
— des moyens de filtrage recevant l'air provenant des moyens à turbines et le transmettant auxdits conduits.

L'invention concerne également une cartouche pour au moins un disque magnétique amovible, destinée à être insérée dans un logement approprié d'une mémoire à disques magnétiques constituée d'une enveloppe à l'intérieur de laquelle est placé le disque, munie d'une première ouverture permettant le passage des têtes de lecture/écriture des informations contenues sur le disque, un dispositif permettant d'obturer cette ouverture lorsque la cartouche est au repos, le moyeu des disques étant accouplé à des moyens d'entraînement en rotation, la cartouche recevant de l'air filtré envoyé par un système de ventilation de la mémoire, cet air étant évacué ensuite par une seconde ouverture pratiquée dans l'enveloppe qui est caractérisée en ce qu'elle comprend:
— des conduits d'arrivée d'air associés à chaque face des disques permettant d'introduire l'air à une pression suffisante au moins au-dessus des zones de chaque face des disques contenant les informations,
— des moyens de filtrage recevant l'air provenant de moyens à turbines extérieurs pour les transmettre aux conduits.

Les caractéristiques et avantages de l'invention apparaîtront dans la description suivante donnée à titre d'exemple non limitatif et en se référant aux dessins annexés; sur ces dessins:

les fig. 1, 2, 3 rappellent comment est constituée une cartouche pour disque(s) magnétique(s) amovible(s) selon l'art antérieur;

la fig. 4 est une vue de trois-quarts en perspective montrant, d'une part, la silhouette générale extérieure d'une cartouche ventilée par le système selon l'invention et, d'autre part, le bâti de la mémoire à disques dans laquelle est insérée cette cartouche;

les fig. 5 et 6 sont des vues en coupe transversale et deux modes de réalisation différents d'une cartouche ventilée par le système selon l'invention, montrant les éléments constitutifs essentiels de cette cartouche en dehors des éléments appartenant au système de ventilation lui-même;

la fig. 5 étant une vue d'une cartouche ne comportant qu'un seul disque amovible;

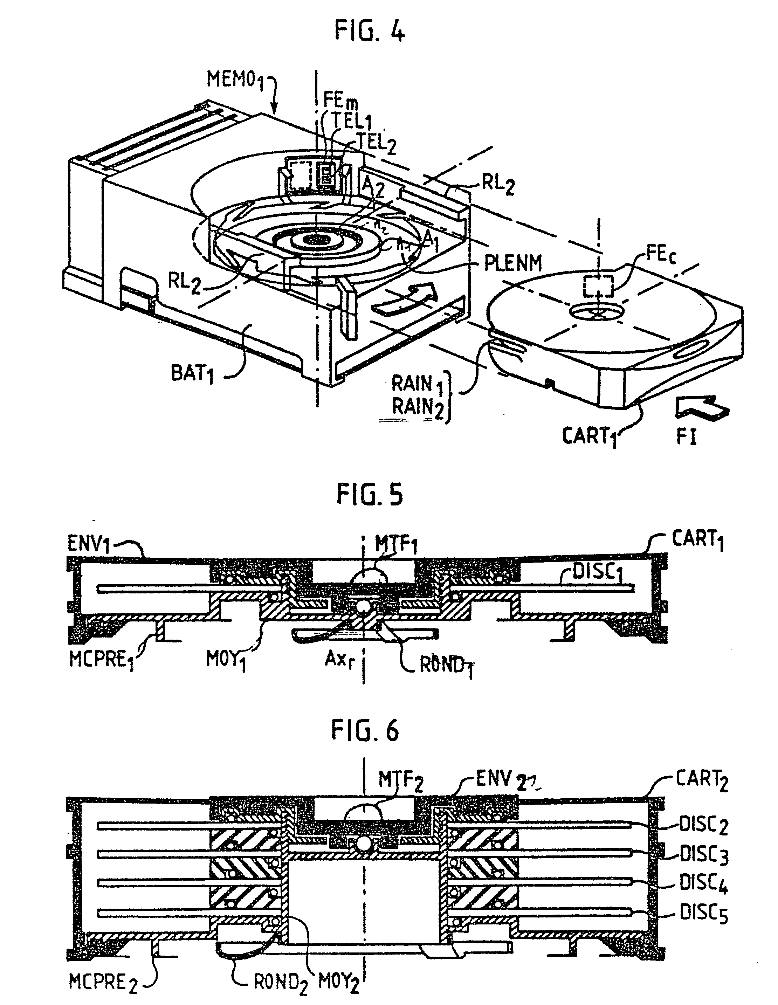

la fig. 6 étant une vue en coupe transversale montrant une cartouche comprenant quatre disques amovibles, ces deux figures montrant la cartouche au repos;

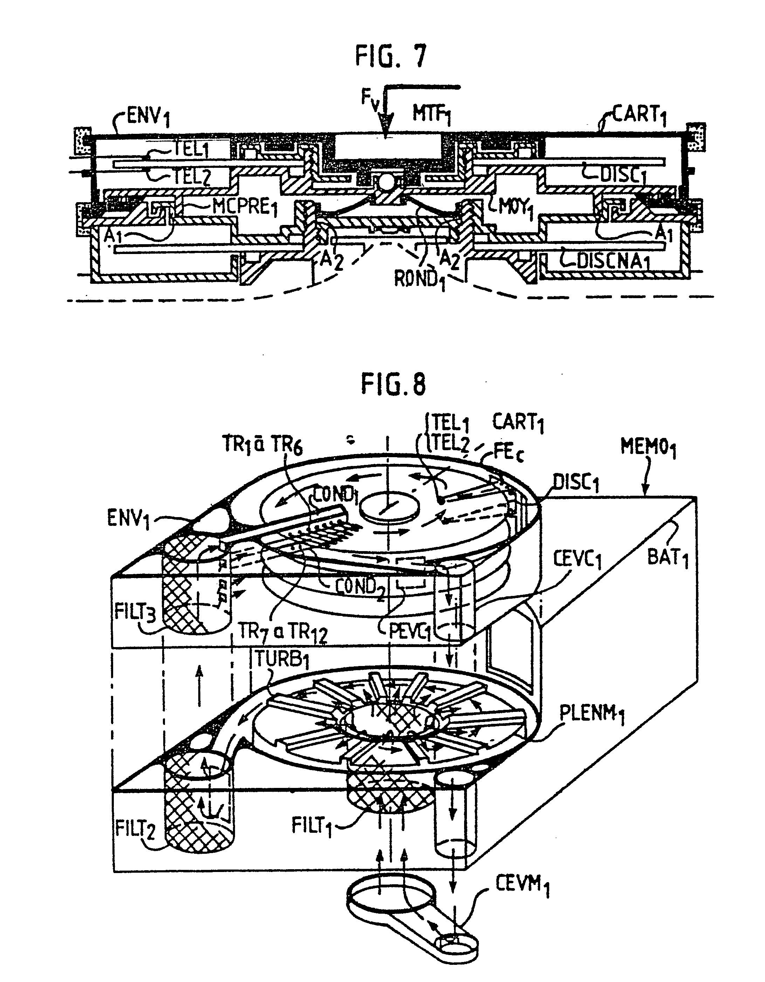

la fig. 7 est une vue en coupe transversale montrant la cartouche de la fig. 5 dans la position qu'elle occupe lorsqu'elle est disposée à l'intérieur de la mémoire à disques à laquelle elle est associée;

la fig. 8 est une vue de trois-quarts en perspective montrant le schéma de principe du système de ventilation d'une cartouche pour disque(s) magnétique(s) amovible(s) selon l'invention;

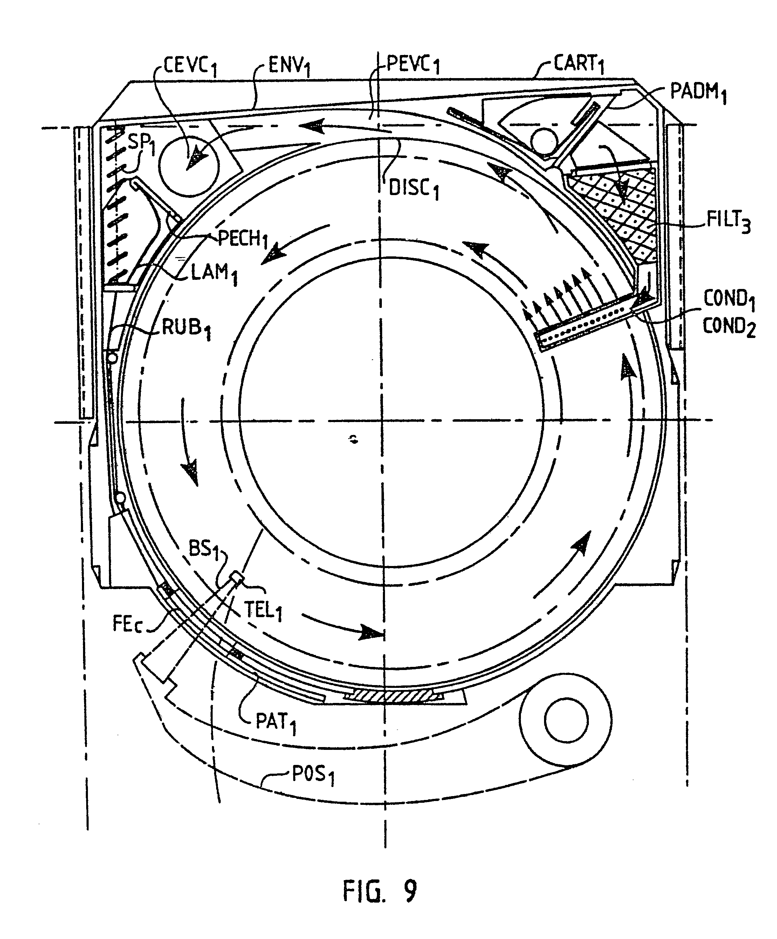

la fig. 9 est une vue en coupe parallèle au plan du disque, de la cartouche ventilée par le système de ventilation selon l'invention, la cartouche étant supposée disposer à l'intérieur de la mémoire à disques à laquelle elle est associée;

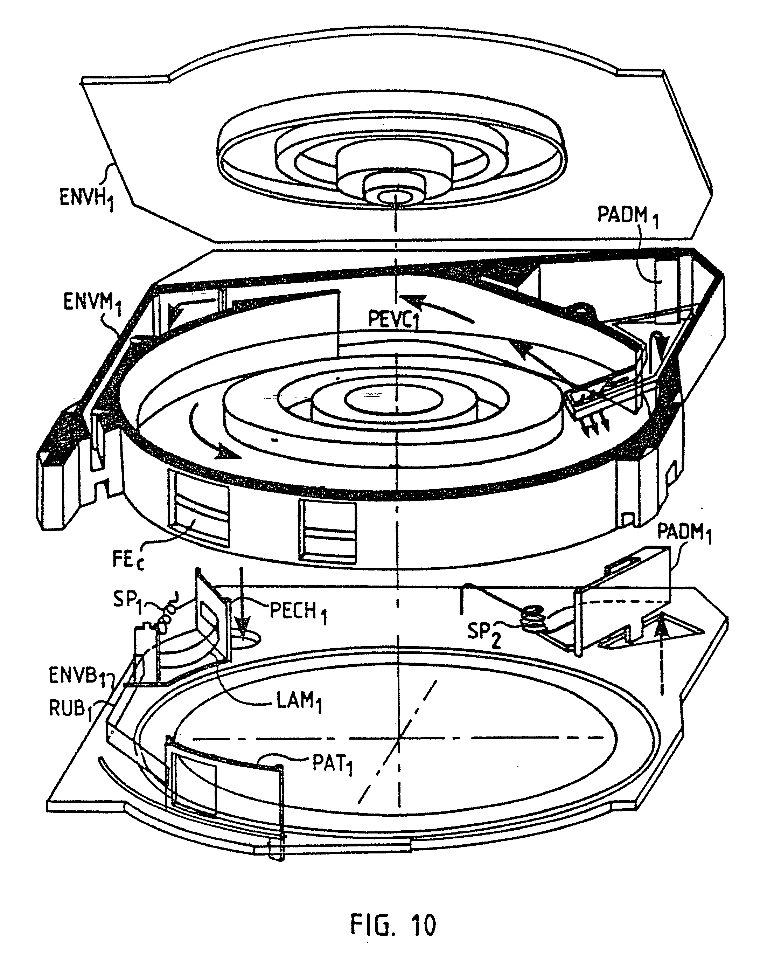

la fig. 10 est une vue de trois-quarts en perspective de l'enveloppe de la cartouche ventilée par le système selon l'invention, permettant de mieux comprendre comment circule l'air filtré de ventilation à l'intérieur de la cartouche;

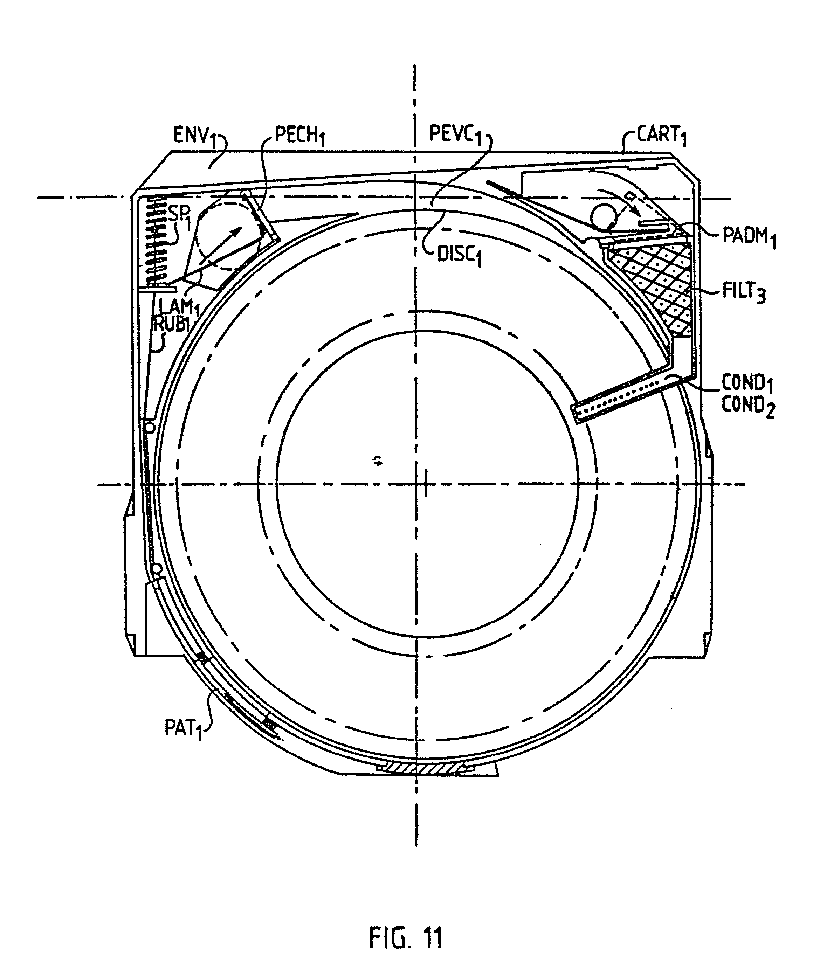

la fig. 11 est une vue en coupe parallèle au plan du disque de la cartouche ventilée par le système selon l'invention, lorsque celle-ci est au repos;

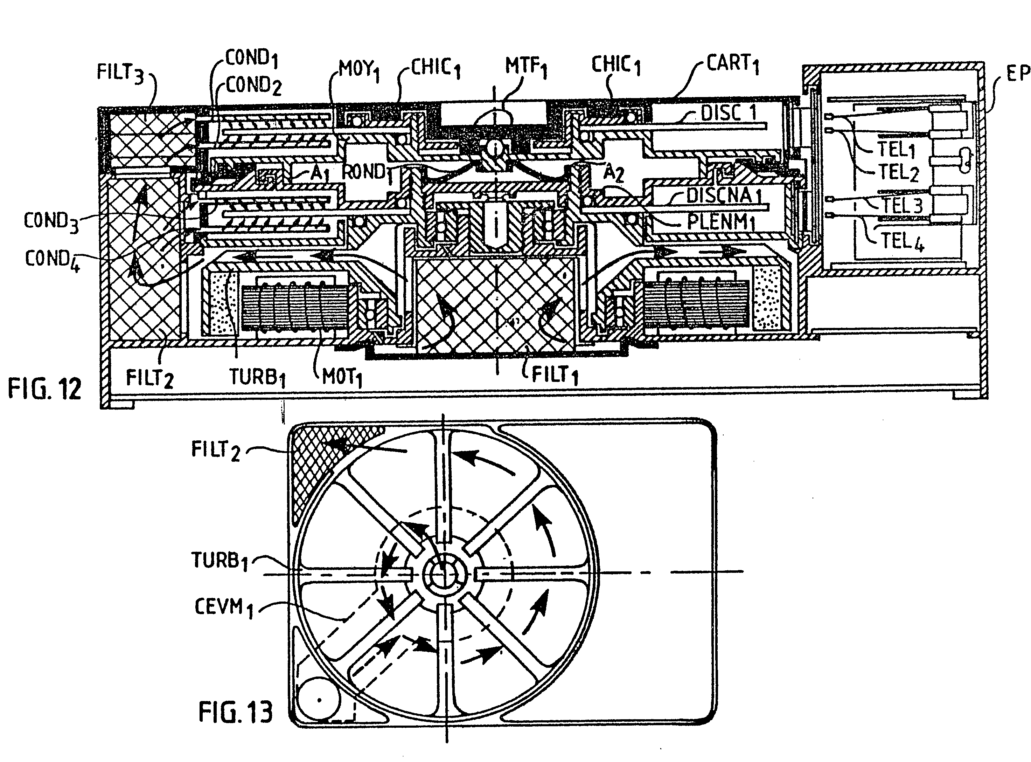

la fig. 12 est une vue en coupe transversale d'un premier exemple de réalisation du système de ventilation d'une cartouche pour disque(s) magnétique(s) amovible(s) selon l'invention dont le principe est montré à la fig. 8, la cartouche ventilée par ce système étant sipposée ne comprendre qu'un seul disque magnétique amovible;

la fig. 13 est une vue de dessus montrant les moyens à turbines appartenant au système de ventilation selon l'invention;

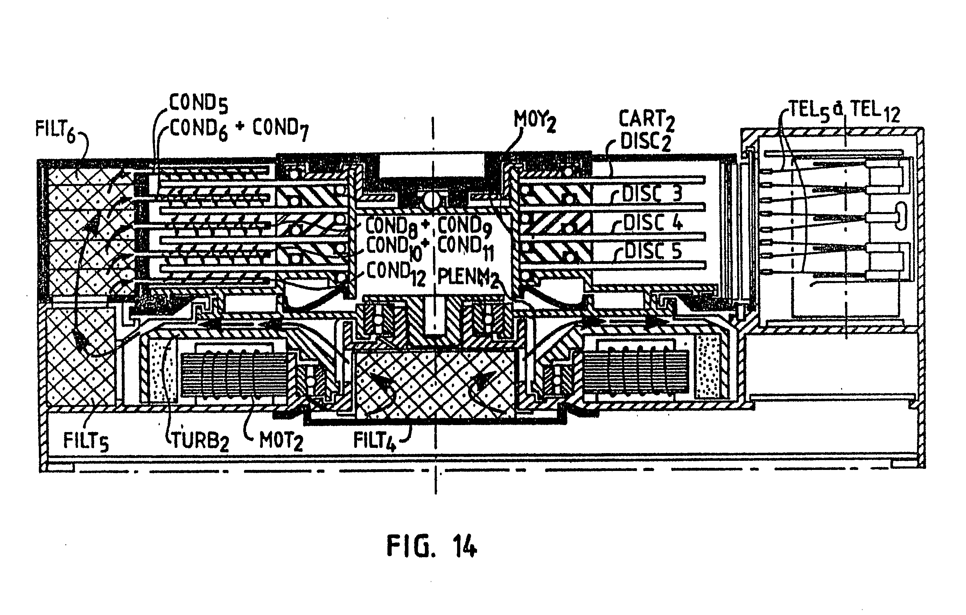

la fig. 14 est une vue en coupe transversale d'un second exemple de réalisation du système de ventilation d'une cartouche pour disque(s) magnétique(s) amovible(s) selon l'invention, cette cartouche comprenant quatre disques amovibles.

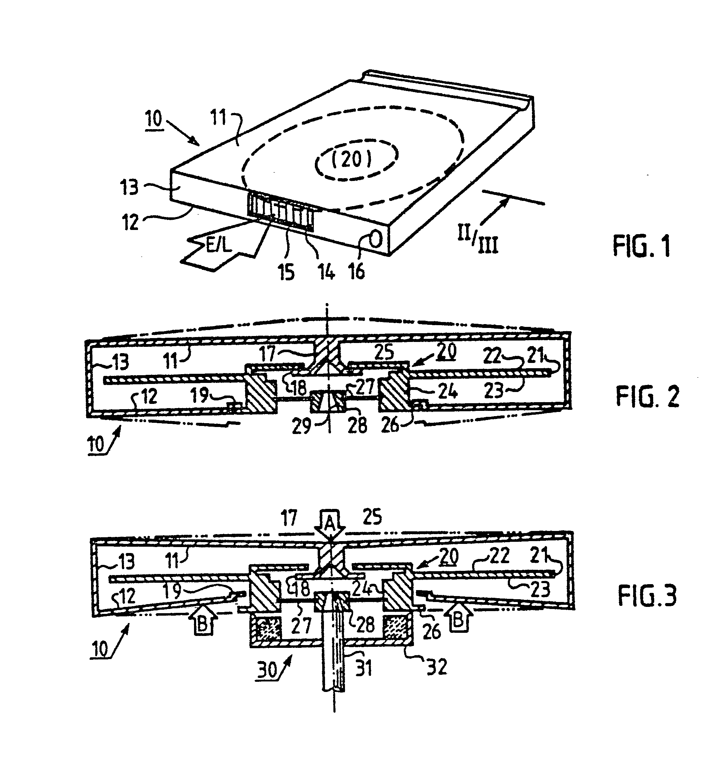

Afin de mieux comprendre les principes de constitution de fonctionnement de la cartouche pour disque(s) magnétique(s) amovible(s) selon l'invention, il est utile de faire quelques rappels illustrés par les fig. 1, 2, 3 sur la constitution et le principe de fonctionnement des cartouches pour disque(s) magnétique(s) amovible(s) selon l'art antérieur.

Une telle cartouche selon l'art antérieur est par exemple décrite dans le brevet français N° 2337396 précité. La fig. 1 montre la cartouche 10 qui se présente sous la forme d'un boîtier plat du contour carré dans laquelle est enfermé le disque magnétique 20. L'une des faces latérales de la cartouche comporte une fenêtre 14 qui est obturée lorsque la cartouche est au repos (c'est-à-dire lorsqu'elle n'est pas insérée dans la mémoire à disques à laquelle elle est associée) par un volet 15. Ce dernier est manœuvré par un mécanisme intérieur inviolable, lors de l'introduction de la cartouche dans la mémoire à disques magnétiques, de manière à ce que la fenêtre ne soit plus obturée.

Dès que le volet 15 est retiré, les têtes magnétiques d'écriture/lecture symbolisées par une flèche à la fig. 1 peuvent être introduites à l'intérieur de la cartouche pour y lire les données contenues sur les deux faces du disque magnétique 20.

La cartouche 10 est réalisée par un assemblage de plusieurs pièces en matériau rigide mais élastiquement déformable. A la fig. 1, on a désigné par 11 et 12 les grandes parois opposées de la cartouche et par 13 la paroi latérale qui contient la fenêtre 14.

La fig. 2 montre la cartouche telle qu'elle se présente pendant ses périodes de repos à l'extérieur de la mémoire à disques, périodes se situant entre deux utilisations successives à l'intérieur de celle-ci. Cette figure montre que la paroi supérieure 11 comporte en son centre une saillie intérieure 17 terminée par un collet extérieur 18 dit anneau d'extraction formant une portée annulaire en regard de la face interne de ladite paroi. Disposée de manière coaxiale à cette saillie, la paroi opposée 12 comporte une ouverture bordée sur sa face externe par une portée annulaire 19.

Le disque 20 comprend essentiellement une âme annulaire plate 21 dont les deux faces 22 et 23 sont recouvertes d'une couche magnétique d'enregistrement et un moyeu annulaire 24 dont les extrémités axialement opposées portent respectivement un collet extérieur 26 engageant la portée du collet 18 et un collet extérieur 26 engageant la portée 19 qui borde l'ouverture de la paroi 12. Dans le passage axial du moyeu 24 est rapporté un diaphragme 28 à trous coniques 29.

Les parois opposées 11 et 12 de la cartouche sont maintenues sensiblement planes et parallèles (comme indiqué en traits pleins) alors que par construction, elles tendent à prendre du fait de leur élasticité, la forme bombée vers l'extérieur montrée en traits mixtes. Il s'ensuit l'existence d'une force axiale de rappel élastique exercée sur ces parois 11 et 12 qui assure le maintien en place du disque 20 dans la cartouche 10 lors des périodes de repos (de stockage) et l'étanchéité des jonctions entre les collets 25 et 26 et les portées 18 et 19.

La fig. 3 montre la position occupée par le disque 20 à l'intérieur de la cartouche 10 lorsque celle-ci est insérée à l'intérieur de la mémoire à disques à laquelle elle est associée. Les parois 11 et 12 sont alors rapprochées (comparer les tracés en traits mixtes qui montrent la position occupée par les parois lors du stockage et en traits pleins lors de l'insertion dans la mémoire à disques). Il s'ensuit que les collets 25 et 26 du moyeu du disque 20 sont dégagés des portées 18 et 19 de la cartouche 10 ce qui permet l'entraînement en rotation du disque et le nettoyage et la ventilation de celui-ci.

L'entraînement du disque est assuré par couplage entre son moyeu 24 et un ensemble moteur (de préférence le moteur peut être un moteur électrique) 30 comprenant un arbre 31 à tête conique qui s'engage dans la bague de centrage 28 et un plateau 32 engageant le collet 26 ou l'extrémité correspondante du moyeu. Ce plateau est ajouté et pourvu de moyens assurant le couplage magnétique, entre le moyeu et les moyens d'entraînement du disque.

Dans la cartouche selon l'art antérieur, l'enlèvement des poussières et particules parasites est obtenu par autoventilation du disque, c'est-à-dire par la ventilation naturelle obtenue par effet de centrifugation de l'air entraîné par la rotation du disque. On montre que, lorsque l'on désire atteindre des densités radiale et longitudinale très élevées, un tel type de ventilation est insuffisant pour avoir une dépollution complète du disque et de l'intérieur de la cartouche. Il subsiste alors un certain nombre de poussières et particules parasites dont les dimensions sont de l'ordre de la distance qui sépare les têtes magnétiques d'écriture/lecture de la surface du disque d'une part et, d'autre part, de la dimension des informations elles-mêmes. Cela nuit à la fiabilité de lecture des informations contenues sur le disque, et peut provoquer des erreurs de la lecture des informations de repérage des pistes et par conséquent des erreurs dans le positionnement des têtes magnétiques au-dessus des pistes du disque, erreurs qu'on ne peut corriger totalement avec les dispositifs d'asservissement en position des têtes de lecture/écriture en regard des pistes du disque, utilisés habituellement.

On montre également qu'un système de ventilation tel que celui décrit et revendiqué dans le brevet N° 2154922, ou l'un ou l'autre des systèmes de ventilation décrits dans les brevets US-A 3740735, FR-A 2232032 et GB-A 2040538 précités ne permettent pas d'éliminer suffisamment les poussières et particules parasites.

Le système de ventilation selon l'invention permet de remédier aux inconvénients rappelés ci-dessus. Il est destiné à ventiler et à dépolluer des cartouches pour disque(s) magnétique(s) amovible(s) telles que les cartouches CART$_1$ et CART$_2$, qui sont représentées respectivement aux fig. 4, 5 et 7, d'une part, et 6 d'autre part.

La cartouche CART$_1$ contenant un seul disque amovible est représentée, vue de trois-quarts en perspective à la fig. 14. Elle est destinée à être insérée dans le réceptacle d'une mémoire à disques MEMO$_1$, dont le bâti est désigné par BAT$_1$.

La cartouche CART$_1$ comprend une poignée de préhension PPR qui permet de faciliter certaines manutentions par l'opérateur chargé de l'introduction dans le réceptacle de la mémoire à disques. Le disque magnétique qu'elle contient est désigné par DISC$_1$. Sur ses parois latérales, elle comporte deux rainures RAIN$_1$ et RAIN$_2$ permettant de la guider sur des rails longitudinaux RL$_1$ et RL$_2$ appartenant au réceptacle du bâti BAT$_1$ de la mémoire à disques MEMO$_1$. Le sens d'introduction de la cartouche dans ce réceptacle est indiqué par la flèche FI.

Cette cartouche comprend une fenêtre FE$_c$ (représentée en traits interrompus à la fig. 4) par où peuvent être introduites des têtes magnétiques d'écriture/lecture telles que TEL$_1$ et TEL$_2$ dont on a représenté symboliquement la face avant sur le bâti de la mémoire à disques MEMO$_1$. Lorsque la cartouche est introduite dans le réceptacle de la mémoire à disques, la fenêtre FE$_c$ se trouve disposée en regard d'une fenêtre FE$_m$ du bâti BAT$_1$. En l'absence de la cartouche CART$_1$, la fenêtre FE$_m$ est normalement obturée par un rideau-fenêtre non représenté pour simplifier la fig. 4. De même lorsque la cartouche CART$_1$ est au repos (c'est-à-dire non disposée à l'intérieur de la mémoire à disques MEMO$_1$) la fenêtre FE$_c$ est fermée par un rideau-fenêtre coulissant à l'intérieur de la cartouche (non représentée pour simplifier la fig. 4).

En l'absence de la cartouche CART$_1$ les deux têtes magnétiques TEL$_1$ et TEL$_2$ sont rétractées à l'intérieur d'une enceinte particulière du bâti BAT$_1$, obturée par le rideau-fenêtre qui ferme la fenêtre FE$_m$.

On a représenté à la fig. 4, une partie des moyens d'entraînement en rotation du disque DISC$_1$ de la cartouche CART$_1$. Cette partie est constituée par un plateau d'entraînement PLENM$_1$ solidaire d'un moteur électrique (non représenté pour simplifier à la fig. 4) ce plateau comportant un plan $\pi_1$ dit de référence (voir également fig. 7), un premier cylindre A$_1$, et un cylindre de référence A$_2$ concentrique du précédent et de diamètre plus faible. La raison de la présence de ces deux cylindres A$_1$ et A$_2$ sera explicitée plus loin.

La mémoire à disques MEMO$_1$ comprend également un disque magnétique non amovible, restant en permanence à l'intérieur du bâti BAT$_1$ désigné par DISCNA$_1$ (seulement représenté à la fig. 7). Ce disque non amovible est entraîné par le même moteur électrique que le disque DICS$_1$ de la cartouche CART$_1$.

On se reporte aux fig. 5 et 7, qui montrent respectivement la cartouche CART$_1$ au repos, et dans la position qu'elle occupe lorsqu'elle est insérée dans la mémoire à disques MEMO$_1$, le disque DISC$_1$ étant entraîné en rotation par les moyens d'entraînement en rotation dont on n'a représenté que le plateau d'entraînement PLENM$_1$ à la fig. 7.

La cartouche CART$_1$ comporte:
— une enveloppe ENV$_1$ réalisée en une matière plastique déformable,
— le disque DISC$_1$ muni de son moyeu MOY$_1$,
— des moyens cylindriques de précentrage MCPRE$_1$ destinés à effectuer un précentrage grossier du moyeu MOY$_1$ par rapport à l'axe de rotation Ax$_r$ du plateau d'entraînement PLENM$_1$,
— une rondelle élastique déformable ROND$_1$ montée sur le moyeu MOY$_1$, constituant des moyens élastiques déformables de centrage précis du moyeu MOY$_1$ par rapport à l'axe de rotation Ax$_r$,
— des moyens MTF$_1$ solidaires de l'enveloppe ENV$_1$ pour transmettre au moyeu et aux moyens élastiques ROND$_1$ une force de verrouillage F$_v$ de la cartouche, normale au plan du disque.

On se reporte à la fig. 7. On a fait figurer sur cette figure les deux têtes magnétiques d'écriture/lecture TEL$_1$, TEL$_2$ passant par la fenêtre FE$_c$ qui n'est plus obturée par un rideau-fenêtre lorsque la cartouche CART$_1$ est insérée dans la mémoire FENO$_1$.

Le fonctionnement de la cartouche CART$_1$ comporte les opérations suivantes:
a) introduction de la cartouche CART$_1$ dans le réceptacle du bâti BAT$_1$, par guidage sur les deux rails longitudinaux RL$_1$ et RL$_2$;
b) verrouillage de la cartouche effectué à l'aide d'un levier extérieur à la cartouche solidaire d'une virole à crans hélicoïdaux appartenant au bâti BAT$_1$. Plusieurs phases successives ont lieu durant cette opération. Ce sont:
1. une descente verticale de la cartouche sur une distance de quelques millimètres environ (4 mm environ),
2. un précentrage grossier du moyeu MOY$_1$ du disque DISC$_1$ à l'intérieur du cylindre A$_1$ effectué grâce aux moyens de précentrage cylindrique MCPRE$_1$ du moyeu MOY$_1$. Ce cylindre vient se placer à l'intérieur du cylindre A$_1$, en même temps qu'il vient en contact avec le plan $\pi_1$ de référence,
3. un précentrage de précision du moyeu MOY$_1$ grâce à la rondelle ROND$_1$ qui vient se placer à l'intérieur du cylindre A$_2$. La virole (non représen-

tée) exerce une pression $P_v$ uniforme sur la périphérie de l'enveloppe qui déforme celle-ci, en raison de son élasticité. Cette déformation a pour effet de transmettre à la rondelle $ROND_1$ une force de verrouillage $F_v$ qui la déforme. La périphérie de la rondelle vient alors en contact avec les parois internes du cylindre et exerce sur celui-ci une pression latérale $P_1$ normale aux parois. D'autre part la rondelle $ROND_1$ s'aplatit de sorte qu'elle vient en contact avec le plan $\pi_1$ de référence en y exerçant une pression normale à celui-ci, à savoir $P_n$. Ainsi la force de verrouillage $F_v$ a un double effet:

— assurer un centrage parfait du moyeu $MOY_1$ par rapport à l'axe $Ax$,

— effectuer un couplage obtenu par adhérence entre le moyeu $MOY_1$ et le plateau $PLENM_1$,

c) désolidarisation de l'enveloppe $ENV_1$ de la cartouche et du moyeu $MOY_1$ portant le disque $DISC_1$, un espace de hauteur se crée alors sous la face inférieure du moyeu $MOY_1$ (voir fig. 7),

d) ouverture de la fenêtre $FE_c$;

e) entraînement en rotation du disque $DISC_1$ par le plateau $PLENM_1$.

De plus amples détails sur les opérations mentionnées en a et b sont donnés dans la demande de brevet EP-A N° 86682 déposée conjointement à la présente demande, par la compagnie titulaire, sous le titre «Cartouche pour disque(s) magnétique(s) amovible(s)».

Le système de ventilation selon l'invention peut également s'appliquer à une cartouche $CART_2$ comprenant une pluralité de disques magnétiques amovibles telle que représentée à la fig. 6, ces disques étant par exemple au nombre de quatre. Ils sont désignés par $DISC_2$ à $DISC_5$. Les principes de constitution et de fonctionnement de la cartouche $CART_2$ sont identiques à ceux de la cartouche $CART_1$. Le moyeu des disques est désigné par $MOY_2$. Il porte une rondelle $ROND_2$ qui constitue des moyens élastiques déformables de centrage précis. Les moyens cylindriques de précentrage sont désignés par $MCPRE_2$ et les moyens de transmission de la force de verrouillage sont désignés par $MTF_2$.

On se reporte à la fig. 8, qui montre le schéma de principe du système de ventilation et de dépollution d'une cartouche telle que $CART_1$.

Les éléments constitutifs essentiels de ce système de ventilation sont les suivants:

— deux conduits d'amenée d'air $COND_1$, $COND_2$ disposés à l'intérieur de la cartouche $CART_1$, le conduit $COND_1$ étant associé à la première face de la cartouche du disque $DISC_1$, le conduit $COND_2$ étant associé à la seconde face de ce disque,

— un orifice $PEVC_1$ d'évacuation de l'air appartient à l'enveloppe $ENV_1$ de la cartouche,

— le filtre $FILT_1$ disposé dans le moyeu du plateau d'entraînement $PLENM_1$,

— des moyens à turbines $TURB_1$ coaxiaux au plateau d'entraînement $PLENM_1$ et au moyeu $MOY_1$ du disque $DISC_1$ (ce moyeu n'est pas représenté pour simplifier à la fig. 8),

— les filtres à air $FILT_2$ et $FILT_3$.

L'air circulant entre l'orifice d'évacuation $PEVC_1$ et le filtre $FILT_1$, le système de ventilation comprend des conduits d'évacuation de l'air appartenant respectivement à la cartouche $CART_1$ et au bâti $BAT_1$ de la mémoire $MEMO_1$, à savoir les conduits $CEVS_1$ et $CVEM_1$.

De préférence, les deux conduits $COND_1$ et $COND_2$ comportent sur toute leur longueur un certain nombre de trous dont six exemplaires ont été représentés à la fig. 8 à savoir les trous $TR_1$ à $TR_6$ pour le conduit $COND_1$ et $TR_7$ à $TR_{12}$ pour le conduit $COND_2$.

Le fonctionnement du système de ventilation représenté à la fig. 8 est le suivant:

— l'air filtré par le filtre $FILT_3$ est introduit au moyen des trous des conduits $COND_1$ et $COND_2$, à une pression suffisante, au-dessus des zones des deux faces du disque $DISC_1$ contenant les informations. On crée ainsi au niveau de chacun des trous $TR_1$ à $TR_6$, d'une part, et $TR_7$ à $TR_{12}$ d'autre part, des jets d'air de dépollution (on dit encore de décontamination) qui permettent de décoller les poussières qui se fixent sur la surface du disque. (Fixation ayant lieu lors des périodes de repos de la cartouche.) Ces jets d'air qui sont donc introduits de la périphérie au centre du disque sont entraînés par centrifugation due à la rotation du disque dans le sens indiqué par les flèches $f_i$ vers la périphérie du disque où ils sont conduits vers l'orifice d'évacuation $PEVC_1$. De cette porte, l'air se dirige vers les conduits $CEVC_1$ et $CEVM_1$ avec une vitesse d'autant plus grande qu'ils sont aspirés par la dépression créée au centre du moyeu du plateau d'entraînement $PLENM_1$ par la turbine $TURB_1$. L'air traverse le filtre $FILT_1$ avant de parvenir au centre de la turbine d'où il est évacué vers la périphérie de celle-ci vers les filtres $FILT_2$ et $FILT_3$.

On voit ainsi que la circulation de l'air à travers l'ensemble du système de ventilation est assurée d'une part, par la rotation du disque $DISC_1$ qui fait circuler l'air tangentiellement à la surface des faces du disque à une vitesse sensiblement voisine de la vitesse de rotation, et d'autre part par la turbine $TURB_1$ qui aspire l'air passant par l'orifice $PEVC_1$ et les conduits $CEV_1$ et $CEVM_1$ pour l'évacuer à nouveau vers le filtre $FILT_3$ à travers le filtre $FILT_2$.

Il est clair que la dépollution et la ventilation seront d'autant plus efficaces qu'on n'introduit aucun air pollué au niveau de la fenêtre $FE_c$ où passent les têtes. Pour cela, l'enceinte EI du bâti $BAT_1$ de la mémoire à disques $MEMO_1$ qui contient le système mécanique de positionnement des têtes au-dessus des pistes du disque est rendue complètement hermétique. La présence du filtre $FILT_2$ permet de récupérer les pollutions dues aux roulements du plateau d'entraînement $PLENM_1$ et du moteur électrique actionnant le plateau d'entraînement $PLENM_1$. Le filtre $FILT_1$ est le filtre principal. Il permet d'éliminer les poussières qui ont été décollées de la surface du disque par l'air introduit au moyen des deux conduits $COND_1$ et $COND_2$, ainsi que les pollutions provenant du frottement de l'air sur les parois des conduits $CEVC_1$ et $CEVM_1$.

La présence du filtre $FILT_3$ contenu dans la cartouche $CART_1$ est rendue nécessaire parce qu'il y a des phénomènes de pollution qui se produisent à la jonction entre la cartouche et le bâti $BAT_1$ de la mémoire à disques $MEMO_1$.

On se reporte aux fig. 9 à 11 qui illustrent, de façon détaillée, la partie du système de ventilation qui se trouve dans la cartouche $CART_1$.

L'enveloppe $ENV_1$ de la cartouche $CART_1$ est composée de trois parties: une partie haute $ENVH_1$, une partie médiane $ENVM_1$ et une partie basse $ENVB_1$.

On a fait figurer sur ces trois figures, l'orifice d'évacuation de l'air $PEVC_1$ qui peut être obturé par une porte d'échappement de l'air $PECH_1$. Cette porte est reliée par l'intermédiaire d'une lame $LAM_1$ et d'un ruban $RUB_1$, à la porte d'accès des têtes $PAT_1$, qui ferme la fenêtre $FE_c$ lorsque la cartouche est au repos. Le ruban $RUB_1$ est également solidaire d'un ressort $SP_1$. La cartouche comprend également une porte d'admission de l'air $PADM_1$ solidaire d'un ressort de torsion $SP_2$.

On considère la fig. 11 qui montre la cartouche $CART_1$ au repos. Dans ce cas, la porte d'admission $PADM_1$ occupe la position indiquée dans la partie droite en haut de la fig. 11. Dans cette position, elle est maintenue fermée par le ressort de torsion $SP_2$ et empêche toute possibilité de pénétration d'air dans le filtre $FILT_3$.

La porte $PECH_1$ obture l'orifice $PEVC_1$ en occupant la position indiquée dans la partie gauche en haut de la fig. 11. Dans cette position, le ressort $SP_1$ est comprimé. Il exerce une traction sur le ruban $RUB_1$ qui maintient ainsi la porte $PAT_1$ en position de fermeture de la fenêtre $FE_c$.

On considère désormais les fig. 9 et 10, où la cartouche est supposée disposée à l'intérieur du bâti $BAT_1$ de la mémoire à disques $MEMO_1$. Dans ces conditions, une virole appartenant au bâti $BAT_1$ de la mémoire à disques, non représentée pour simplifier les fig. 9 et 10, fait passer la porte $PAT_1$ de la position indiquée à la fig. 11 à la position indiquée à la fig. 9. Grâce à l'action de cette virole, la porte $PAT_1$ exerce une traction sur le ruban $RUB_1$, le ressort $SP_1$ et la lame $LAM_1$, de manière à fermer la porte $PECH_1$ dans la position indiquée à la fig. 9 (et également à la fig. 10). L'orifice d'évacuation $PEVC_1$ est alors ouvert, permettant à l'air qui circule à l'intérieur de la cartouche de passer dans le conduit $CEVC_1$. Dans le même temps où les portes $PAC_1$ et $PECH_1$ sont ouvertes, la virole agit également sur la porte d'entrée d'air de manière à libérer celle-ci en l'amenant dans la position indiquée en haut à droite de la fig. 9. L'air provenant du filtre $FILT_2$ (voir également fig. 8) peut alors passer par le filtre $FILT_3$ avant d'être introduit au-dessus de la zone des informations du disque $DISC_1$ par les conduits d'amenée d'air $COND_1$ et $COND_2$. Ainsi qu'on le voit à la fig. 9, l'air introduit par les deux conduits circule dans le sens des flèches $F_i$ pour sortir par l'orifice $PEVC_1$ avant de passer dans le conduit $CEVC_1$.

On a également fait figurer à la fig. 9, en traits interrompus, la tête d'écriture/lecture $TEL_1$, son bras-support $BS_1$ et le dispositif mécanique de positionnement $POS_1$ (suppose être dans ce cas un positionneur ou encore actionneur rotatif).

L'enceinte EP de l'actionneur rotatif, complètement hermétique, n'est mise en pression qu'au cours de la mise en rotation du disque, de manière progressive, ce qui permet de minimiser tout effet de turbulence qui se produit au niveau de la fenêtre $FE_c$, turbulence qui pourrait modifier le comportement des têtes au-dessus des zones d'information du disque, et pourrait éventuellement les endommager.

Pour éviter toutes autres turbulences, on maintient un flux d'air laminaire en plaçant les entrées et sorties d'air, au moins à trois-quarts de tour en amont des têtes (voir fig. 9). Dans le même but, on construit l'enveloppe de la cartouche $CART_1$, de manière que ses parois internes soient complètement lisses.

Les trois portes $PAT_1$, $PECH_1$ et $PADM_1$ glissent sur des joints caoutchoutés placés sur l'enveloppe de la cartouche $CART_1$.

La fig. 13 illustre de façon plus détaillée la constitution des moyens à turbines $TURB_2$. On voit, en suivant le trajet indiqué par l'ensemble des flèches $FL_i$, le cheminement de l'air depuis le conduit $CEVM_1$ jusqu'au filtre $FILT_2$ en passant par les différentes ailettes de la turbine $TURB_2$.

On considère la fig. 12 qui est une vue en coupe transversale montrant le système de ventilation de la cartouche $CART_1$, celle-ci étant disposée à l'intérieur de la mémoire à disques $MEMO_1$. On suppose que la mémoire à disques $MEMO_1$ comporte également un disque non amovible $DISCNA_1$. On a fait figurer sur cette fig. 12, les différents éléments constitutifs du système de ventilation mentionnés plus haut, à savoir les trois filtres $FILT_1$, $FILT_2$ et $FILT_3$, les deux conduits d'amenée d'air $COND_1$ et $COND_2$, la turbine $TURB_1$. On reconnaît également la rondelle $ROND_1$, le cylindre de référence $A_2$, le cylindre $A_1$, le plan de référence $\pi_1$, les moyens de transmission de la force de verrouillage $MTF_1$ et le moyeu $MOY_1$. Le plateau d'entraînement en rotation du disque $DISC_1$ et du disque $DISCNA_1$ est solidaire du moteur électrique $MOT_1$. Dans la partie droite de la fig. 12, est représentée l'enceinte contenant le positionneur des têtes magnétiques. Il y a quatre têtes magnétiques à savoir $TEL_1$ et $TEL_2$ associées à chacune des faces du disque $DISC_1$, et les têtes $TEL_3$ et $TEL_4$ respectivement associées aux deux faces du disque non amovible $DISCNA_1$. Il convient de remarquer que deux conduits d'amenée d'air, à savoir $COND_3$ et $COND_4$ sont associés au disque $DISCNA_1$ et font donc ainsi partie du système de ventilation de la mémoire à disques $MEMO_1$, qui est aussi celui de la cartouche $CART_1$. On a également fait figurer le sens de circulation de l'air par un ensemble de flèches.

Le système de ventilation selon l'invention est applicable à une cartouche $CART_2$ comprenant une pluralité de disques amovibles, par exemple, quatre disques, $DISC_2$ à $DISC_5$ comme indiqué à la fig. 14. Les disques sont solidaires d'un moyeu $MOY_2$ entraînés en rotation par un plateau d'entraînement $PLENM_2$ lui-même solidaire d'un moteur $MOT_2$. Le système de ventilation comprend le filtre principal $FILT_4$ monté dans le moyeu des plateaux d'entraînement $PLENM_2$ des moyens à tur-

bines $TURB_2$ coaxiaux au plateau $PLENM_3$, et au moyeu $MOY_2$, et les filtres $FILT_5$ et $FILT_6$, ainsi que l'ensemble des conduits d'amenée d'air $COND_5$ à $COND_{12}$. On remarquera que les conduits $COND_6$ et $COND_7$, $COND_8$ et $COND_9$, ainsi que le $COND_{10}$ et $COND_{11}$ sont jumelés ainsi qu'on peut le voir à la fig. 14. Comme à la fig. 12, le sens de circulation de l'air est indiqué par des flèches. On a également représenté sur cette même fig. 14 une enceinte comportant le positionneur des huit têtes magnétiques d'écriture/lecture associées aux faces des disques $DISC_2$ à $DISC_4$. Ces têtes sont désignées par $TEL_5$ à $TEL_{12}$.

Ainsi qu'on peut le voir notamment aux fig. 12 et 14, les moyens d'entraînement $PLENM_1$ et $PLENM_2$ contenant des roulements à billes, les cartouches $CART_1$ et $CART_2$ comportent des chicanes $CHIC_1$ et $CHIC_2$ permettant d'éviter que les poussières de lubrifiant des roulements ne viennent polluer l'espace des cartouches $CART_1$ et $CART_2$ où sont contenues les disques $DISC_1$ et $DISC_2$ à $DISC_5$. Ces chicanes peuvent être avantageusement remplacées par des joints ferrofluidiques tels que ceux fabriqués par la société Ferro Fluidics S.A.

Il est clair que les moyens à turbines $TURB_1$, $TURB_2$ qui ont été représentés sur les plateaux d'entraînement $PLENM_1$, $PLENM_2$ peuvent être aisément montés sur les moyeux $MOY_1$, $MOY_2$ des cartouches $CART_1$ et $CART_2$, sans changer pour autant la nature de l'invention.

## Revendications

1. Système de ventilation d'une cartouche ($CART_1$, $CART_2$) pour au moins un disque magnétique amovible ($DISC_1$, $DISC_2$, $DISC_3$) destinée à être insérée dans un logement ($BAT_1$) approprié d'une mémoire à disques magnétiques ($MEMO_1$, $MEMO_2$), constituée d'une enveloppe ($ENV_1$, $ENV_2$) à l'intérieur de laquelle est placé le disque ($DISC_1$, $DISC_2$, $DISC_3$), la cartouche comprenant une première ouverture ($FE_c$) permettant le passage de têtes de lecture/écriture ($TEL_1$, $TEL_2$, $TEL_5$ à $TEL_{12}$) des informations contenues sur le disque, un dispositif ($PAT_1$) permettant d'obturer cette première ouverture lorsque la cartouche est au repos, le moyeu ($MOY_1$, $MOY_2$) du disque comportant des moyens d'accouplement de celui-ci à des moyens ($PLENM_1$, $PLENM_2$) d'entraînement en rotation, le logement comprenant lesdits moyens d'entraînement et des moyens à turbines ($TURB_1$, $TURB_2$) qui sont coaxiaux au moyeu ($MOY_1$, $MOY_2$) du disque et aux moyens d'entraînement ($PLENM_1$, $PLENM_2$) et reçoivent l'air évacué provenant d'une seconde ouverture ($PEVC_1$) pratiquée dans l'enveloppe, et renvoient cet air à travers des conduits ($COND_1$, $COND_2$, $COND_5$ à $COND_{12}$) dans la cartouche ($CART_1$, $CART_2$), caractérisé en ce que la cartouche comprend:
— des conduits d'arrivée d'air ($COND_1$, $COND_2$, $COND_3$ à $COND_{12}$) associés à chaque face du disque permettant d'introduire l'air à une pression suffisante au moins au-dessus des zones de chaque face du disque contenant les informations,
— des moyens de filtrage ($FILT_3$) recevant l'air provenant des moyens à turbines ($TURB_1$, $TURB_2$) et le transmettant auxdits conduits ($COND_1$, $COND_2$, $COND_5$ à $COND_{12}$).

2. Cartouche ($CART_1$, $CART_2$) pour au moins un disque magnétique amovible ($DISC_1$, $DISC_2$ à $DISC_5$) destinée à être insérée dans un logement approprié d'une mémoire à disques magnétiques ($MEMO_1$, $MEMO_2$) constituée d'une enveloppe ($ENV_1$, $ENV_2$) à l'intérieur de laquelle est placé le disque, munie d'une première ouverture permettant le passage des têtes de lecture/écriture des informations contenues sur le disque, un dispositif ($PAT_1$) permettant d'obturer cette ouverture lorsque la cartouche ($CART_1$, $CART_2$) est au repos, le moyeu ($MOY_1$, $MOY_2$) du disque étant accouplé à des moyens d'entraînement en rotation ($PLENM_1$, $PLENM_2$), la cartouche recevant de l'air filtré envoyé par un système de ventilation de la mémoire, cet air étant évacué ensuite par une seconde ouverture ($PEVC_1$) pratiquée dans l'enveloppe ($ENV_1$, $ENV_2$), caractérisée en ce qu'elle comprend:
— des conduits d'arrivée d'air ($COND_1$, $COND_2$, $COND_5$ à $COND_{12}$) associés à chaque face du disque, permettant d'introduire l'air à une pression suffisante au moins au-dessus des zones de chaque face du disque ($DISC_1$, $DISC_2$ à $DISC_5$) contenant les informations,
— des moyens de filtrage ($FILT_3$) recevant l'air provenant de moyens à turbines extérieurs pour les transmettre aux conduits ($COND_1$, $COND_2$, $COND_5$ à $COND_{12}$).

3. Système de ventilation selon la revendication 1, caractérisé en ce que les moyens d'entraînement ($PLENM_1$, $PLENM_2$) comprennent des moyens de filtrage ($FILT_1$) recevant l'air évacué par la seconde ouverture et le transmettant aux moyens à turbines ($TURB_1$, $TURB_2$).

4. Système de ventilation selon l'une des revendications 1 ou 2, caractérisé en ce que des troisièmes moyens de filtrage ($FILT_2$) sont disposés entre les moyens à turbines et les premiers moyens de filtrage ($FILT_3$) contenus dans la cartouche.

5. Cartouche selon la revendication 2, caractérisée en ce qu'elle comprend une porte d'échappement d'air ($PECH_1$) destinée à obturer l'ouverture d'évacuation de l'air ($PEVC_1$) lorsque la cartouche est au repos.

6. Cartouche selon l'une des revendications 2 ou 5, caractérisée en ce qu'elle comprend une porte d'admission de l'air ($PADM_1$) disposée en amont des premiers moyens de filtrage ($FILT_3$) contenus dans la cartouche destinée à empêcher le passage de l'air dans ces moyens, lorsque la cartouche est au repos.

## Patentansprüche

1. System zur Belüftung einer Kassette ($CART_1$, $CART_2$) für wenigstens eine entfernbare Magnetplatte ($DISC_1$, $DISC_2$, $DISC_3$), die dazu

bestimmt ist, in eine geeignete Aufnahme (BAT$_1$) eines Magnetplattenspeichers (MEMO$_1$, MEMO$_2$) eingeschoben zu werden, gebildet aus einer Hülle (ENV$_1$, ENV$_2$), in deren Innenraum die Platte (DISC$_1$, DISC$_2$, DISC$_3$) eingebracht ist, wobei die Kassette eine erste Öffnung (FE$_c$) aufweist, die den Durchgang von Lese/Schreibköpfen (TEL$_1$, TEL$_2$, TEL$_5$ bis TEL$_{12}$) für die auf der Platte enthaltenen Informationen gestattet, eine Vorrichtung (PAT$_1$) umfasst, die es gestattet, diese erste Öffnung zu verschliessen, wenn die Kassette in Ruhe ist, wobei die Nabe (MOY$_1$, MOY$_2$) der Platte Mittel zum Ankoppeln derselben an Drehantriebsmittel (PLENM$_1$, PLENM$_2$) umfasst, wobei ferner die Aufnahme die genannten Antriebsmittel sowie Turbinenmittel (TURB$_1$, TURB$_2$) umfasst, die koaxial mit der Nabe (MOY$_1$, MOY$_2$) der Platte und mit den Antriebsmitteln (PLEMN$_1$, PLEMN$_2$) sind und die abgeführte Luft aus einer zweiten, in der Hülle angebrachten Öffnung (PEVC$_1$) empfangen sowie diese Luft über Leitungen (COND$_1$, COND$_2$, COND$_5$ bis COND$_{12}$) in der Kassette (CART$_1$, CART$_2$) ausstossen, dadurch gekennzeichnet, dass die Kassette umfasst:
— Luftankunftsleitungen (COND$_1$, COND$_2$, COND$_5$ bis COND$_{12}$), die jeder Fläche der Platte zugeordnet sind und es gestatten, die Luft mit ausreichendem Druck wenigstens oberhalb der Zonen jeder Plattenfläche, welche die Informationen enthält, einzuspeisen,
— Filtermittel (FILT$_3$), welche die Luft von den Turbinenmitteln (TURB$_1$, TURB$_2$) empfangen und sie zu den genannten Leitungen (COND$_1$, COND$_2$, COND$_5$ bis COND$_{12}$) weiterführen.

2. Kassette (CART$_1$, CART$_2$) für wenigstens eine entfernbare Magnetplatte (DISC$_1$, DISC$_2$ bis DISC$_5$), die dazu bestimmt ist, in eine geeignete Aufnahme eines Magnetplattenspeichers (MEMO$_1$, MEMO$_2$) eingeschoben zu werden, gebildet aus einer Hülle (ENV$_1$, ENV$_2$), in deren Innenraum die Platte angeordnet ist, mit einer ersten Öffnung, welche den Durchgang der Lese/Schreibköpfe für die auf der Platte enthaltenen Informationen gestattet, mit einer Vorrichtung (PAT$_1$), welche das Verschliessen dieser Öffnung gestattet, wenn die Kassette (CART$_1$, CART$_2$) im Ruhezustand ist, wobei die Nabe (MOY$_1$, MOY$_2$) der Platte an Drehantriebsmittel (PLENM$_1$, PLENM$_2$) angekoppelt ist, wobei ferner die Kassette gefilterte Luft empfängt, welche durch ein Ventilationssystem des Speichers zugeführt und anschliessend über eine zweite Öffnung (PEVC$_1$) in der Hülle (ENV$_1$, ENV$_2$) abgeführt wird, dadurch gekennzeichnet, dass sie umfasst:
— Luftankunftsleitungen (COND$_1$, COND$_2$, COND$_5$ bis COND$_{12}$), die jeder Fläche der Platte zugeordnet sind und es gestatten, die Luft unter ausreichendem Druck wenigstens oberhalb der Zonen jeder Plattenfläche (DISC$_1$, DISC$_2$ bis DISC$_5$), welche die Informationen enthalten, einzuspeisen,
— Filtermittel (FILT$_3$), welche die Luft von externen Turbinenmitteln empfangen, um sie den Leitungen (COND$_1$, COND$_2$, COND$_5$ bis COND$_{12}$) zuzuführen.

3. Belüftungssystem nach Anspruch 1, dadurch gekennzeichnet, dass die Antriebsmittel (PLENM$_1$, PLENM$_2$) Filtermittel (FILT$_1$) umfassen, welche die über die zweite Öffnung abgeführte Luft empfangen und sie zu den Turbinenmitteln (TURB$_1$, TURB$_2$) weiterleiten.

4. Belüftungssystem nach einem der beiden Ansprüche 1 oder 2, dadurch gekennzeichnet, dass dritte Filtermittel (FILT$_2$) zwischen den Turbinenmitteln und den ersten Filtermitteln (FILT$_3$) angeordnet sind, welche in der Kassette enthalten sind.

5. Kassette nach Anspruch 2, dadurch gekennzeichnet, dass sie eine Luftaustrittstür (PECH$_1$) umfasst, welche dazu bestimmt ist, die Luftabführöffnung (PEVC$_1$) zu verschliessen, wenn die Kassette im Ruhezustand ist.

6. Kassette nach einem der Ansprüche 2 oder 5, dadurch gekennzeichnet, dass sie eine Lufteintrittstür (PADM$_1$) umfasst, die strömungsaufwärts von den ersten Filtermitteln (FILT$_3$) angeordnet ist, die in der Kassette enthalten sind, um den Durchgang von Luft in diesen Mitteln zu verhindern, wenn die Kassette im Ruhezustand ist.

**Claims**

1. Ventilation system for a cartridge (CART$_1$, CART$_2$) for at least one removable magnetic disc (DISC$_1$, DISC$_2$, DISC$_3$) intended to be inserted into an appropriate housing (BAT$_1$) of a magnetic disc memory (MEMO$_1$, MEMO$_2$), formed by a cover (ENV$_1$, ENV$_2$) within which is situated the disc (DISC$_1$, DISC$_2$, DISC$_3$), the cartridge comprising a first opening (FE$_c$) through which can pass read/write heads (TEL$_1$, TEL$_2$, TEL$_5$ to TEL$_{12}$) for the data contained on the disc, a device (PAT$_1$) for closing off this first opening when the cartridge is idle, the hub (MOY$_1$, MOY$_2$) of the disc comprising means of coupling the same to rotary drive means (PLENM$_1$, PLENM$_2$), the housing comprising the said drive means and fan means (TURB$_1$, TURB$_2$) which are co-axial with the hub (MOY$_1$, MOY$_2$) of the disc and with the drive means (PLENM$_1$, PLENM$_2$) and receive the air evacuated which originates from a second opening (PEVC$_1$) formed in the cover, and impel this air via passages (COND$_1$, COND$_2$, COND$_5$ to COND$_{12}$) into the cartridge (CART$_1$, CART$_2$), characterised in that the cartridge comprises:
— air intake passages (COND$_1$, COND$_2$, COND$_5$ to COND$_{12}$) associated with each surface of the disc, permitting the introduction of the air under a sufficient pressure at least over the sections of each surface of the disc containing the data,
— filter means (FILT$_3$) receiving the air coming from the fan means (TURB$_1$, TURB$_2$) and transferring the same to the said passages (COND$_1$, COND$_2$, COND$_5$ to COND$_{12}$).

2. Cartridge (CART$_1$, CART$_2$) for at least one removable magnetic disc (DISC$_1$, DISC$_2$ to DISC$_5$) intended to be inserted into an appropriate housing of a magnetic disc memory (MEMO$_1$, MEMO$_2$) formed by a cover (ENV$_1$, ENV$_2$) within which is situated the disc, provided with a first opening through which can pass the read/write heads for the data contained on the disc, a device ($PAT_1$) whereby this opening may be closed when the cartridge ($CART_1$, $CART_2$) is idle, the hub ($MOY_1$, $MOY_2$) of the disc being coupled to rotary drive means ($PLENM_1$, $PLENM_2$), the cartridge receiving the filtered air ducted *via* a memory ventilation system, this air then being discharged *via* a second opening ($PEVC_1$) formed in the cover ($ENV_1$, $ENV_2$), characterised in that it comprises:
— air intake passages ($COND_1$, $COND_2$, $COND_5$ to $COND_{12}$) associated with each surface of the disc, whereby air may be fed in at a sufficient pressure at least over the sections of each surface of the disc ($DISC_1$, $DISC_2$ to $DISC_5$) containing the data,
— filter means ($FILT_3$) receiving the air originating from external fan means for transfer to the passages ($COND_1$, $COND_2$, $COND_5$ to $COND_{12}$).

3. Ventilation system according to Claim 1, characterised in that the drive means ($PLENM_1$, $PLENM_2$) comprises filter means ($FILT_1$) receiving the air discharged *via* the second opening and transferring the same to the fan means ($TURB_1$, $TURB_2$).

4. Ventilation system according to one of the Claims 1 or 2, characterised in that third filter means ($FILT_2$) are situated between the fan means and the first filter means ($FILT_3$) contained in the cartridge.

5. Cartridge according to Claim 2, characterised in that it has an air escape flap ($PECH_1$) intended to close the air discharge opening ($PEVC_1$) when the cartridge is idle.

6. Cartridge according to one of the Claims 2 or 5, characterised in that it comprises an air inlet flap ($PADM_1$) situated upstream of the first filter means ($FILT_3$) contained in the cartridge, intended to prevent the passage of air into these means when the cartridge is idle.

FIG. 1

FIG. 2

FIG.3

# FIG. 4

MEMO₁
FEm
TEL₁
TEL₂
A₂
RL₂
A₁
PLENM
RL₂
FEc
BAT₁
RAIN₁
RAIN₂
CART₁
FI

# FIG. 5

ENV₁
MTF₁
CART₁
DISC₁
MCPRE₁
MOY₁
Ax_r
ROND₁

# FIG. 6

MTF₂
ENV₂
CART₂
DISC₂
DISC₃
DISC₄
DISC₅
MCPRE₂
ROND₂
MOY₂

# FIG. 7

# FIG.8

FIG. 9

FIG. 10

FIG. 11

FIG. 12

FIG. 13

FIG. 14